# EUROPEAN PATENT APPLICATION

(11) **EP 2 781 484 A1**
(43) Date of publication of application: **24.09.2014**
(21) Application number: 12849964.7
(22) Date of filing: 15.11.2012
(51) Int. Cl.: C01B 31/02, H01M 4/96, H01M 8/10

(54) **SUBSTRATE WITH SUBSTANTIALLY VERTICALLY ALIGNED CARBON NANOTUBES**

(30) Priority: 17.11.2011 JP 2011251862
(71) Applicant: TOYOTA JIDOSHA KABUSHIKI KAISHA, Toyota-shi, Aichi-ken, 471-8571 (JP); Hitachi Zosen Corporation, Osaka-shi, Osaka 559-8559 (JP)
(72) Inventor: IMANISHI, Masahiro, Toyota-shi Aichi 471-8571 (JP); MIYAMOTO, Shinji, Osaka 559-8559 (JP); SUGIMOTO, Iwao, Osaka 559-8559 (JP); YAMASHITA, Tomoya, Osaka 559-8559 (JP)
(74) Representative: Kuhnen & Wacker
(86) International application number: PCT/JP2012/079708
(87) International publication number: WO 2013/073641

(57) **Abstract**

An object of the present invention is to provide a substrate with approximately vertically aligned carbon nanotubes, the carbon nanotubes configured to have excellent transferability and be able to transfer a carbon nanotube layer that is more uniform in thickness than ever before. Disclosed is a substrate with approximately vertically aligned carbon nanotubes, wherein the carbon nanotubes are approximately vertically aligned on the substrate, and wherein, at the substrate side rather than the middle part of the longitudinal direction of the carbon nanotubes, there is a part where the number density of the carbon nanotubes in an approximately parallel plane to the substrate, is smaller than that in other parts.

## Description

### Technical Field

The present invention relates to a substrate with approximately vertically aligned carbon nanotubes, the carbon nanotubes being configured to have excellent transferability and be able to transfer a carbon nanotube layer that is more uniform in thickness than ever before.

### Background Art

In fuel cells, a fuel and an oxidant are supplied to two electrically-connected electrodes to electrochemically oxidize the fuel, thereby converting chemical energy directly to electrical energy. Unlike thermal power generation, fuel cells are not limited by the Carnot cycle; therefore, they show high energy conversion efficiency. A fuel cell generally comprises a stack of fuel cells, each having an electrolyte membrane sandwiched by a pair of electrodes as the basic structure, i.e., a membrane-electrode assembly as the basic structure.

Electrochemical reaction at the anode and cathode of fuel cells is developed by introducing a gas such as fuel gas or oxidant gas into a triple phase boundary (three-phase interface) where the gas is in contact with catalyst particles and a polyelectrolyte, the catalyst particles being supported on a carrier (conductor) and the polyelectrolyte ensuring ion conductive paths.

Electrode reaction at the anode side catalyst layer and the cathode side catalyst layer is active when the amount of the catalyst supported on carbon particles (e.g., carbon black) is large, resulting in an increase in power generation performance of batteries. However, catalysts used in fuel cells are noble metals such as platinum, and it is problematic in that there is an increase in fuel cell production cost by increasing the supported catalyst amount.

In a reaction electrode in which a catalyst is supported on carbon particles, there is a loss of electrons between the carbon particles and between a separator and the carbon particles, which functions as a current collector. This electron loss is thought to be a cause of stopping an increase in power generation performance.

A fuel cell has been proposed as a prior art for avoiding such problems with production cost and electron loss, in which carbon nanotubes (hereinafter may be referred to as CNTs) are used in fuel cell electrodes. An electrode using CNTs has a small electrical resistance and when compared to the electrode in which a catalyst is supported on carbon particles, there are advantages such that a loss of electrons is inhibited and there is an increase in power generation efficiency. Also, the electrode using CNTs is advantageous in that the supported expensive noble metal catalyst can be efficiently used for electrode reaction.

Meanwhile, from the viewpoint of constructing a fine nanostructure with CNTs, CNT patterning technique has been drawing attention. Disclosed in Patent Literature 1 is a technique relating to a CNT transfer method using photocurable silicon resin.

### Citation List

Patent Literature 1: Japanese Patent Application Laid-Open No.2005-129406

### Summary of Invention

### Technical Problem

The inventors of the present invention have found that there are problems with conventional CNT transfer methods as disclosed in Patent Literature 1, such that poor transfer may be caused and a CNT layer thus obtained may have a non-uniform thickness.

The present invention was achieved in light of the above circumference, and an object of the present invention is to provide a substrate with approximately vertically aligned CNTs, the CNTs being configured to have excellent transferability and be able to transfer a CNT layer with a thickness that is more uniform than ever before.

### Solution to Problem

A first substrate with approximately vertically aligned carbon nanotubes according to the present invention is characterized in that, at the substrate side rather than the middle part of the longitudinal direction of the carbon nanotubes, there is a part where the number density of the carbon nanotubes in an approximately parallel plane to the substrate, is smaller than that in other parts.

In the first substrate with the approximately vertically aligned carbon nanotubes according to the present invention, the diameter of the carbon nanotubes in the substrate interface part is larger than the diameter of the carbon nanotubes in the part where the number density of the carbon nanotubes is smaller than that in other parts.

A second substrate with approximately vertically aligned carbon nanotubes according to the present invention is characterized in that, at the substrate side rather than the middle part of the longitudinal direction of the carbon nanotubes, there is a part where the diameter of the carbon nanotubes in an approximately parallel plane to the substrate, is smaller than that in other parts.

In the second substrate with the approximately vertically aligned carbon nanotubes according to the present invention, the diameter of the carbon nanotubes in the substrate interface part is larger than the diameter of the carbon nanotubes in the part where the diameter of the carbon nanotubes is smaller than that in other parts.

A third substrate with approximately vertically aligned carbon nanotubes according to the present invention is characterized in that, at the substrate side rather than the middle part of the longitudinal direction of the carbon nanotubes, there is a part where the number density and diameter of the carbon nanotubes in an approximately parallel plane to the substrate, are smaller than those in other parts.

In the third substrate with the approximately vertically aligned carbon nanotubes according to the present invention, the diameter of the carbon nanotubes in the substrate interface part is larger than the diameter of the carbon nanotubes in the part where the number density and diameter of the carbon nanotubes are smaller than those in other parts.

### Advantageous Effects of Invention

According to the present invention, by providing, at the substrate side rather than the middle part of the longitudinal direction of the CNTs, a part where less CNTs are present, the part is preferentially ruptured when removing and transferring the CNTs from the substrate. Therefore, a CNT layer with a uniform thickness can be obtained.

### Brief Description of Drawings

Fig. 1 is a schematic sectional view of the first embodiment of the substrate with the approximately vertically aligned CNTs according to the present invention.
Fig. 2 is a schematic sectional view of the second embodiment of the substrate with the approximately vertically aligned CNTs according to the present invention.
Fig. 3 is a schematic sectional view of the third embodiment of the substrate with the approximately vertically aligned CNTs according to the present invention.
Fig. 4 is a schematic sectional view of a preferred example of the first embodiment of the substrate with the approximately vertically aligned CNTs according to the present invention.
Fig. 5 is a schematic sectional view of a preferred example of the second embodiment of the substrate with the approximately vertically aligned CNTs according to the present invention.
Fig. 6 is a schematic sectional view of a preferred example of the third embodiment of the substrate with the approximately vertically aligned CNTs according to the present invention.
Fig. 7 is an SEM image of a cross section of CNTs in Example 2, taken along the longitudinal direction.
Fig. 8 is a TEM image of the substrate interface part in Example 2.
Figs. 9 are a Voronoi diagram of the near-substrate part in Example 2 and a Voronoi diagram of the middle part in Example 2.
Fig. 10 is a bar chart (histogram) of the diameter of CNTs in the substrate interface part in Example 2.
Fig. 11 is a histogram of the following CNT diameters: the diameter of CNTs in the substrate interface part in Example 2; the diameter of CNTs in the near-substrate part in Example 2; the diameter of CNTs in the middle part in Example 2; and the diameter of CNTs in the surface part in Example 2.
Figs. 12 show schematic sectional views showing a problem with conventional CNT transfer methods.
Fig. 13 is a schematic sectional view of a conventional substrate with CNTs.

### Description of Embodiments

A first substrate with approximately vertically aligned carbon nanotubes according to the present invention (hereinafter may be referred to as the first invention) is characterized in that at the substrate side rather than the middle part of the longitudinal direction of the carbon nanotubes, there is a part where the number density of the carbon nanotubes in an approximately parallel plane to the substrate, is smaller than that in other parts.

A second substrate with approximately vertically aligned carbon nanotubes according to the present invention (hereinafter may be referred to as the second invention) is characterized in that at the substrate side rather than the middle part of the longitudinal direction of the carbon nanotubes, there is a part where the diameter of the carbon nanotubes in an approximately parallel plane to the substrate, is smaller than that in other parts.

A third substrate with approximately vertically aligned carbon nanotubes according to the present invention (hereinafter may be referred to as the third invention) is characterized in that at the substrate side rather than the middle part of the longitudinal direction of the carbon nanotubes, there is a part where the number density and diameter of the carbon nanotubes in an approximately parallel plane to the substrate, are smaller than those in other parts.

In the first invention, at the substrate side, there is a part where the number density of the CNTs is smaller than that in other parts. In the second invention, at the substrate side, there is a part where the diameter of the CNTs is smaller than that in other parts. The third invention has the characteristics of the first and second inventions. That is, in the third invention, at the substrate side, there is a part where the number density and diameter of the CNTs are smaller than those in other parts.

These three inventions are common in the following: a part is provided at the substrate side rather than the middle part of the longitudinal direction of the CNTs, where less CNTs are present compared to other parts. Therefore, these three inventions exert such an effect that the part is preferentially ruptured when removing and transferring the CNTs from the substrate; therefore, a CNT layer with a uniform thickness can be obtained.

Hereinafter, common characteristics in the three inventions will be mainly explained. Each invention will be explained therebetween.

In conventional CNT transfer methods, it is inevitable to face the following transfer problems: after the transfer of CNTs, some CNTs remain on the substrate; and a CNT layer obtained by the transfer of CNTs, has a non-uniform thickness.

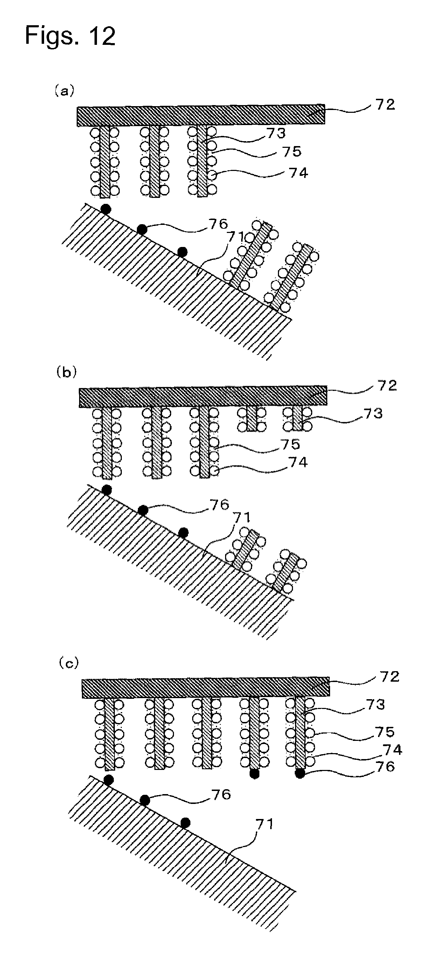

Figs. 12 show schematic sectional views showing a problem with conventional CNT transfer methods. Figs. 12 are views showing the process of transferring CNTs 73 from a substrate 71 to an object 72 to which the CNTs will be transferred (e.g., electrolyte membrane). Catalyst particles 74 are supported on the CNTs 73, and the CNTs 73 are coated with an electrolyte resin 75. When the CNTs have excellent transferability, catalyst particles 76, which act as the nucleus for the growth of CNTs, are left on the substrate 71 after the CNTs are transferred.

Fig. 12 (a) is a view showing such an example that some of the CNTs remain on the substrate after the transfer. The reason is thought to be as follows: in a CNT layer composed of conventional CNTs, the diameter and/or number density of the CNTs is uniform all over the CNT layer; therefore, the CNTs are not ruptured, and part or all of the CNTs cannot attach to the object 72 to which the CNTs will be transferred (e.g., electrolyte membrane).

Fig. 12 (b) is a view showing such an example that the thickness of the transferred CNT layer is not uniform. The reason is thought to be as follows: in the CNT layer composed of conventional CNTs, the diameter and/or number density of the CNTs is uniform all over the CNT layer; therefore, the ruptured part of each CNT varies among the CNTs and results in the non-uniform thickness of the CNT layer.

In conventional CNT transfer methods, there has been such a problem that CNTs are transferred while containing catalyst particles. Fig. 12 (c) is a view showing that CNTs are transferred while containing catalyst particles. The reason is thought to be as follows: conventional CNTs do not have a part which is easily ruptured, so that they are detached from the substrate, including the catalyst particles 76. As just described, when used in a fuel cell, a membrane electrode assembly comprising a CNT layer in which catalyst particles are contained, may poison other components of the fuel cell. Also, since the catalyst particles are removed from the substrate by the CNTs, the substrate cannot be reused again for the growth of CNTs and results in a decrease in production efficiency.

As a result of diligent researches, the inventors of the present invention have found the following and completed the present invention: by providing, in a CNT layer, a part where less CNTs are present, i.e., a part where the number density and/or diameter of CNTs is smaller than that in other parts, the part is preferentially ruptured when transferring the CNTs; therefore, a CNT layer with a uniform thickness can be obtained and results in an increase in production efficiency.

In the present invention, the CNTs approximately vertically aligned on substrate indicate CNTs that are aligned substantially perpendicularly to the plane direction of the substrate. Such CNTs encompass those having a linear or non-linear shape in the tube length direction. In the present invention, more specifically, the CNTs approximately vertically aligned on the substrate indicate the following: in the case of CNTs having a linear shape in the tube length direction, the line makes an approximately right angle with the plane direction of the substrate, in particular, an angle of 70 degrees or more and 90 degrees or less; in the case of CNTs having a non-linear shape in the tube length direction, the line connecting the center of one end surface of and the center of the other end surface of each CNT, makes an approximately right angle with the plane direction of the substrate, in particular, an angle of 70 degrees or more and 90 degrees or less.

In the present invention, the approximately parallel plane to the substrate indicates a plane that makes an angle of 0 degree or more and 20 degrees or less with the substrate.

In the present invention, the number density of the CNTs in the approximately parallel plane to the substrate is an indicator that represents, with the number of the CNTs, the rate of the CNTs per unit area in a given approximately parallel plane to the substrate.

An example of the method for calculating the number density of the CNTs in the approximately parallel plane to the substrate, is described below. First, the CNTs are embedded in a resin. A part thereof is very slightly sliced in an approximately parallel direction to the substrate, and the slice is observed by TEM. Examples of the part include the following: an interface part with the substrate; a near-substrate part which is about 5 to 10 µm distant from the substrate; a middle part of the tube length direction; and a surface part which is farthest from the substrate.

The thus-obtained TEM image is subjected to image processing and measured for the number of CNTs. The measurement is performed in 1 to 5 fields. The total number of CNTs measured is divided by the total area of fields measured, and the thus-obtained value is used the number density of CNTs.

In the present invention, the diameter of CNTs is an indicator of the size of CNTs sliced in a given approximately parallel plane to the substrate. In the present invention, as described below, the diameter of CNTs may vary depending on the part to be sliced. In the present invention, the diameter of CNTs can be the average of the diameters of a predetermined number of CNTs in a predetermined part, or it can be the peak (mode) of the distribution of the diameters of a predetermined number of CNTs in a predetermined part.

An example of the method for calculating the diameter of CNT is described below. First, in the same manner as the above-mentioned method for calculating the number density of CNTs, a part of the resin-embedded CNTs is very slightly sliced and the slice is observed by TEM. Next, the thus-obtained TEM image is subjected to image processing. The processed image is analyzed for contrast, followed by the measurement of the diameter of CNTs. In particular, 50 to 100 CNTs are measured to obtain the diameter distribution. From the distribution, the peak (mode) is derived. The diameter which is found to correspond to the peak, is used as the diameter of CNTs.

Hereinafter, the three parts (the surface, middle and near-substrate parts) of the CNTs on the substrate of the present invention, or the four parts (the surface, middle, near-substrate and substrate interface parts) of the CNTs on the same, will be considered in terms of number density and diameter.

The surface part of the CNTs refers to the part of the tip end of the CNTs, which is farthest from the substrate. It also indicates the part which comes into, when transferring the CNTs, direct contact with the object to which the CNTs will be transferred. Provided that in the length direction of the CNTs, the interface with the substrate is referred to as 0 and the tip end part of the CNTs is referred to as 100, the surface part of the CNTs refers to the part in the range of 95 to 100, for example.

The middle part of the CNTs refers to the middle of the longitudinal direction of the CNTs. Provided that in the length direction of the CNTs, the interface with the substrate is referred to as 0 and the tip end part of the CNTs is referred to as 100, the middle part of the CNTs refers to the part in the range of 45 to 55, for example.

The near-substrate part of the CNTs refers to the part which is very near the substrate. Provided that in the length direction of the CNTs, the interface with the substrate is referred to as 0 and the tip end part of the CNTs is referred to as 100, the near-substrate part of the CNTs refers to the part in the range of 0 to 15, for example. In the case of considering the near-substrate side and the substrate interface part separately, provided that in the length direction of the CNTs, the interface with the substrate is referred to as 0 and the tip end part of the CNTs is referred to as 100, the near-substrate part of the CNTs refers to the part in the range of 10 to 15, for example.

The substrate interface part of the CNTs refers to the part which is in contact with the substrate and catalyst particles that act as the nucleus for the growth of CNTs. Provided that in the length direction of the CNTs, the interface with the substrate is referred to as 0 and the tip end part of the CNTs is referred to as 100, the substrate interface part of the CNTs refers to the part in the range of 0 to 5, for example.

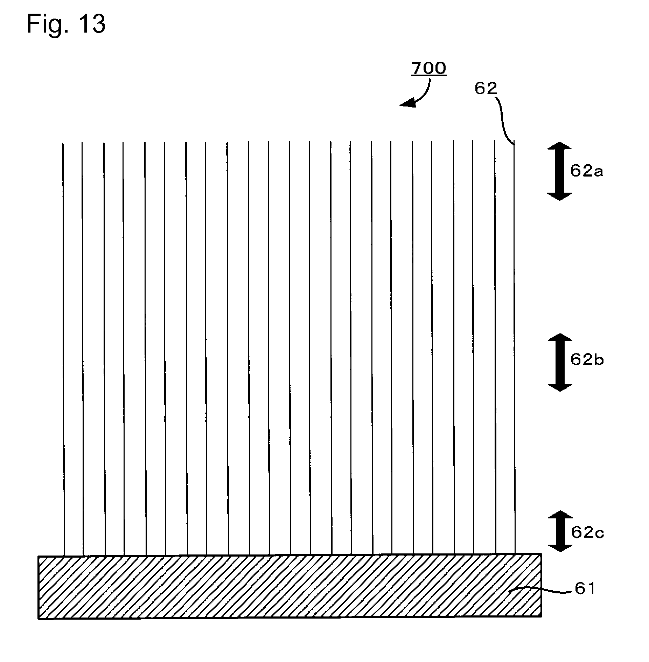

Fig. 13 is a schematic sectional view of a conventional substrate with CNTs (hereinafter referred to as conventional substrate 700). The conventional substrate 700 comprises a substrate 61 and CNTs 62. No catalyst particles are shown in Fig. 13.

As shown in Fig. 13, the conventional substrate 700 comprises CNTs 62, which are almost the same in length and almost the same in diameter between the near-substrate part and the surface part thereof. That is, the number density and diameter of the CNTs are almost the same in a surface part 62a, which is farthest from the substrate, a middle part 62b, and a near-substrate part 62c. In such a conventional substrate 700, as described above, the characteristics of the CNTs are almost uniform between the near-substrate part and the surface part, and the CNTs do not have a part which has low strength and is preferentially ruptured upon transfer, so that the conventional substrate causes a problem when transferring the CNTs.

The inventors of the present invention have found the following: by providing, at the substrate side rather than the middle part of the longitudinal direction of the CNTs, the part where the number density of the CNTs is smaller than that in other parts, the transferability of the CNTs is increased. The part with such a small number density is smaller than other parts in the sum of the sectional area of the CNTs; therefore, the part is easily and preferentially ruptured and has high transferability.

Also, the inventors of the present invention have found the following: by providing, at the substrate side rather than the middle part of the longitudinal direction of the CNTs, the part where the diameter of the CNTs is smaller than that in other parts, the transferability of the CNTs is increased.

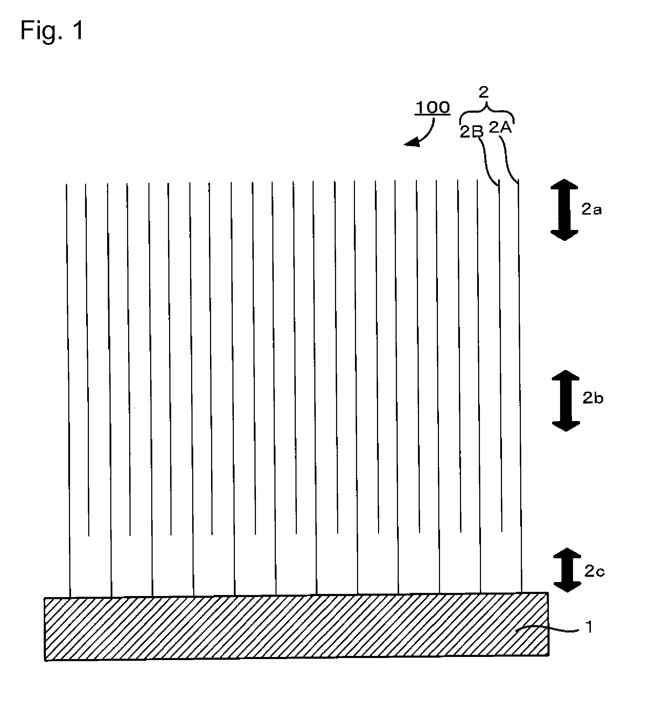

Fig. 1 is a schematic sectional view of the first embodiment of the substrate with the approximately vertically aligned CNTs according to the present invention. The first embodiment is an example of the first invention. The first embodiment 100 comprises a substrate 1 and CNTs 2. No catalyst particles are shown in Figs. 1 to 6.

As shown in Fig. 1, the first embodiment 100 comprises CNTs 2A, which are connected to the substrate and are almost the same in diameter, and CNTs 2B, which are not connected to the substrate and are almost the same in diameter. Also as shown in Fig. 1, the CNTs 2A are longer than the CNT 2B. Such a structure is possible when, in the first production method described below for example, CNTs that have been prevented from growing and removed from the substrate by keeping the substrate at high temperature and stopping the supply of both a carbon source and a hydrogen gas, become the CNTs 2B, and CNTs that have kept growing and have not been removed from the substrate become the CNT 2A.

As just described, because the number density of the CNTs in a near-substrate part 2c is smaller than that of the CNTs between a surface part 2a and a middle part 2b, the CNTs in the near-substrate part 2c are more easily ruptured than the CNTs in other parts, upon transfer. As a result, the CNT layer thus obtained is allowed to have a uniform thickness.

In the first embodiment, examples of the number density of the CNTs are as follows. The number density of the CNTs between the surface part and the middle part is 1 ×10⁸ to 5×10¹⁰ CNTs/cm². The number density of the CNTs in the near-substrate part is 75% or less of the number density of the CNTs between the surface part and the middle part.

In the first embodiment, the mode of the diameter of the CNTs between the surface part and the near-substrate part is 15 to 30 nm, for example.

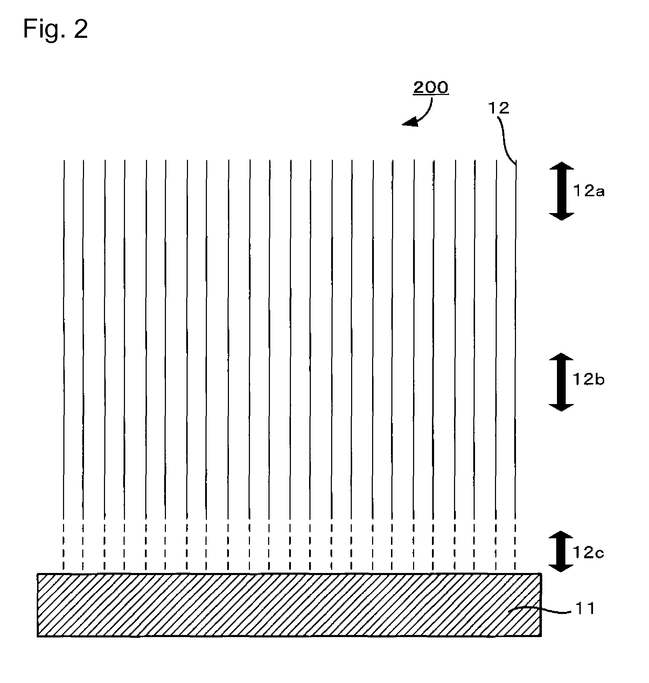

Fig. 2 is a schematic sectional view of the second embodiment of the substrate with the approximately vertically aligned CNTs according to the present invention. The second embodiment is an example of the second invention. The second embodiment 200 comprises a substrate 11 and CNTs 12. The diameter of a dashed line part of each CNT 12 is smaller than the diameter of a solid line part thereof.

As shown in Fig. 2, the diameter of the CNTs 12 in a near-substrate part 12c is smaller than the diameter of the CNTs 12 between a surface part 12a and a middle part 12b.

As just described, because the diameter of the CNTs in a near-substrate part 12c is smaller than that of the CNTs between the surface part 12a and the middle part 12b, the CNTs in the near-substrate part 12c are more easily ruptured than the CNTs in other parts, upon transfer. As a result, the CNT layer thus obtained is allowed to have a uniform thickness.

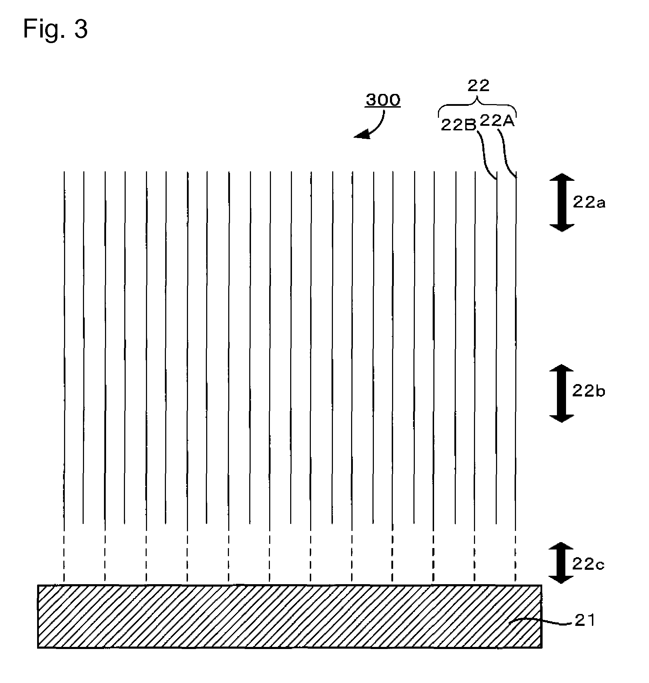

Fig. 3 is a schematic sectional view of the third embodiment of the substrate with the approximately vertically aligned CNTs according to the present invention. The third embodiment is an example of the third invention. The third embodiment 300 comprises a substrate 21 and CNTs 22. The diameter of a dashed line part of each CNT 22 is smaller than the diameter of a solid line part thereof.

As shown in Fig. 3, the third embodiment 300 comprises CNTs 22A, which are connected to the substrate, and CNTs 22B, which are not connected to the substrate and are almost the same in diameter. Also as shown in Fig. 3, the CNTs 22A are longer than the CNTs 22B. In addition, the diameter of the CNTs 22A in a near-substrate part 22c is smaller than the diameter of the CNTs 22A between a surface part 22a and a middle part 22b. Such a structure is possible when, in the second production method described below for example, CNTs that have been prevented from growing and removed from the substrate by increasing the supply of a hydrogen gas and stopping the supply of a carbon source become the CNTs 22B; CNTs that have kept growing and have not been removed from the substrate become the CNTs 22A; and the etching effect of the hydrogen gas on the CNTs 22A is increased.

As just described, because the number density of the CNTs in the near-substrate part 22c is smaller than that of the CNTs between the surface part 22a and the middle part 22b and the diameter of the CNTs 22A in the near-substrate part 22c is smaller than that of the CNTs 22A between the surface part 22a and the middle part 22b, the CNTs 22A in the near-substrate part 22c are more easily ruptured then the CNTs in other parts, upon transfer. As a result, the CNT layer thus obtained is allowed to have a uniform thickness.

Preferably, the diameter of the CNTs in the substrate interface part is larger than the diameter of the CNTs in the part where the number density and diameter of the CNTs are smaller than those in other parts. As just described, because the sum of the sectional area of the CNTs in the substrate interface part is larger than the sum of the sectional area of the CNTs in the near-substrate part, catalyst particles can be left on the substrate when transferring the CNTs, so that the substrate becomes reusable.

Embodiments in which the CNTs in the substrate interface part are resistant to rupture upon transfer, include the following: an embodiment in which the number density of the CNTs in the substrate interface part is larger than that in the near-substrate part; an embodiment in which the diameter of the CNTs in the substrate interface part is larger than that in the near-substrate part; and an embodiment in which the number density of the CNTs in the substrate interface part is larger than that in the near-substrate part and the diameter of the CNTs in the substrate interface part is larger than that in the near-substrate part. Of them, the embodiment in which the diameter of the CNTs in the substrate interface part is larger than that in the near-substrate part, will be described hereinafter.

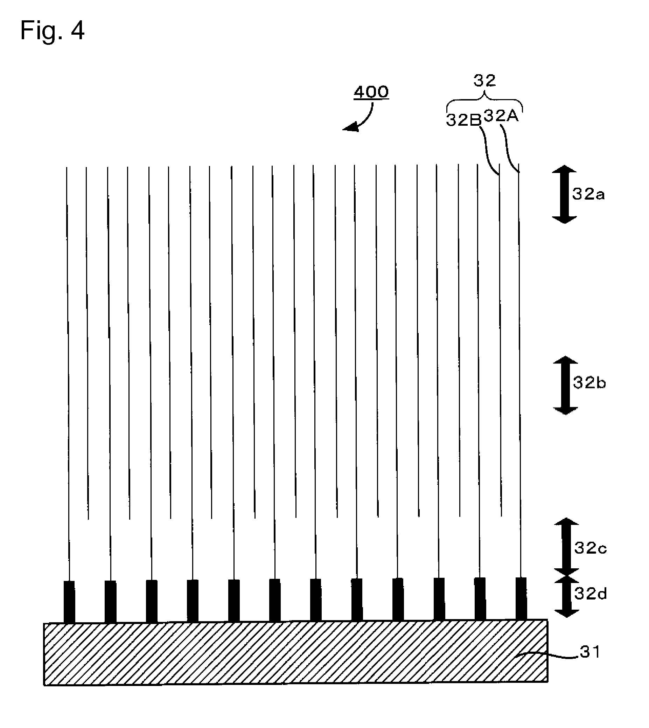

Fig. 4 is a schematic sectional view of a preferred example of the first embodiment of the substrate with the approximately vertically aligned CNTs according to the present invention. The preferred example 400 of the first embodiment comprises a substrate 31 and CNTs 32.

As shown in Fig. 4, the preferred example 400 of the first embodiment comprises CNTs 32A, which are connected to the substrate and in which the diameter is larger in the substrate interface part, and CNTs 32B, which are not connected to the substrate and are almost the same in diameter. As shown in Fig. 4, the CNTs 32A are longer than the CNTs 32B. Such a structure is possible when, in the first production method described below for example, CNTs that have been prevented from growing and removed from the substrate by keeping the substrate at high temperature and stopping the supply of both a carbon source and a hydrogen gas, become the CNTs 32B, and CNTs that have been kept growing and have not been removed from the substrate, become the CNTs 32A. Also as shown in Fig. 4, the diameter of the CNTs 32A in a substrate interface part 32d is larger than that in a near-substrate part 32c. Such a structure is possible when, in a preferred embodiment of the first production method described below for example, the supply of a hydrogen gas is stopped, while supplying a carbon source, to negate the etching effect of the hydrogen gas on the CNTs.

As just described, the number density of the CNTs between the near-substrate part 32c and the substrate interface part 32d is smaller than that between a surface part 32a and a middle part 32b; moreover, the diameter of the CNTs 32A in the substrate interface part 32d is larger than the diameter of the CNTs 32A in the near-substrate part 32c. Therefore, upon transfer, while the CNTs in the near-substrate part 32c are more easily ruptured, the CNTs in the substrate interface part 32d are more resistant to rupture. As a result, catalyst particles are likely to remain on the substrate when transferring the CNTs, so that the substrate becomes reusable.

In the preferred example of the first embodiment, the number density of the CNTs is as follows, for example. First, the number density of the CNTs between the surface part and the middle part is 1×10⁸ to 5×10¹⁰ CNTs/cm². The number density of the CNTs between the near-substrate part and the substrate interface part is 75% or less of the number density of the CNTs between the surface part and the middle part.

In the preferred example of the first embodiment, the diameter of the CNTs is as follows, for example. First, the mode of the diameter of the CNTs between the surface part and the near-substrate part is 15 to 30 nm. The mode of the diameter of the CNTs in the substrate interface part is 5% or more larger than that between the surface part and the near-substrate part.

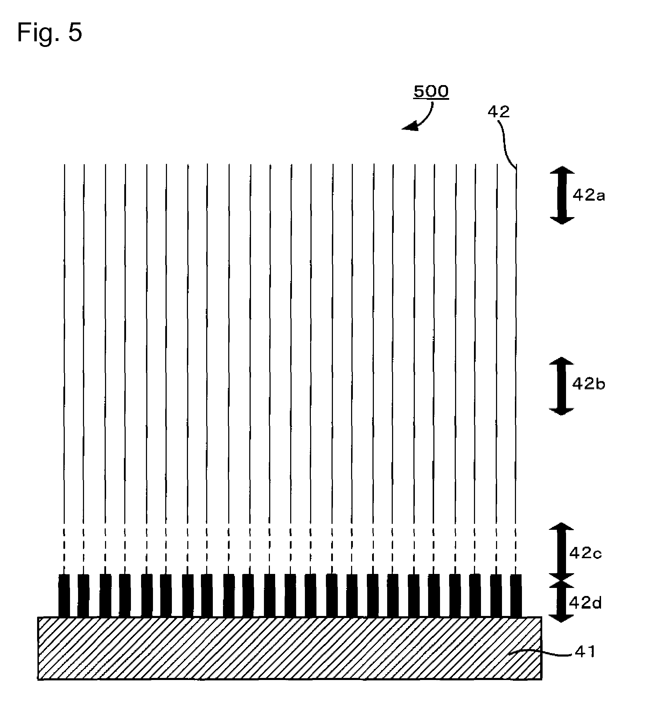

Fig. 5 is a schematic sectional view of a preferred example of the second embodiment of the substrate with the approximately vertically aligned CNTs according to the present invention. The preferred example 500 of the second embodiment comprises a substrate 41 and CNTs 42. The diameter of a dashed line part of each CNT 42 is smaller than the diameter of a solid line part thereof.

As shown in Fig. 5, the diameter of the CNTs 42 in a near-substrate part 42c is smaller than the diameter of the CNTs 42 between a surface part 42a and a middle part 42b. Also as shown in Fig. 5, the diameter of the CNTs 42 in a substrate interface part 42d is larger than that in a near-substrate part 42c.

As just described, because the diameter of the CNTs in the near-substrate part 42c is smaller than both the diameter of the CNTs between the surface part 42a and the middle part 42b and the diameter of the CNTs in the substrate interface part 42d, while the CNTs in the near-substrate part 42c are more easily ruptured upon transfer, the CNTs in the substrate interface part 42d are more resistant to rupture. As a result, catalyst particles are likely to remain on the substrate when transferring the CNTs, so that the substrate becomes reusable.

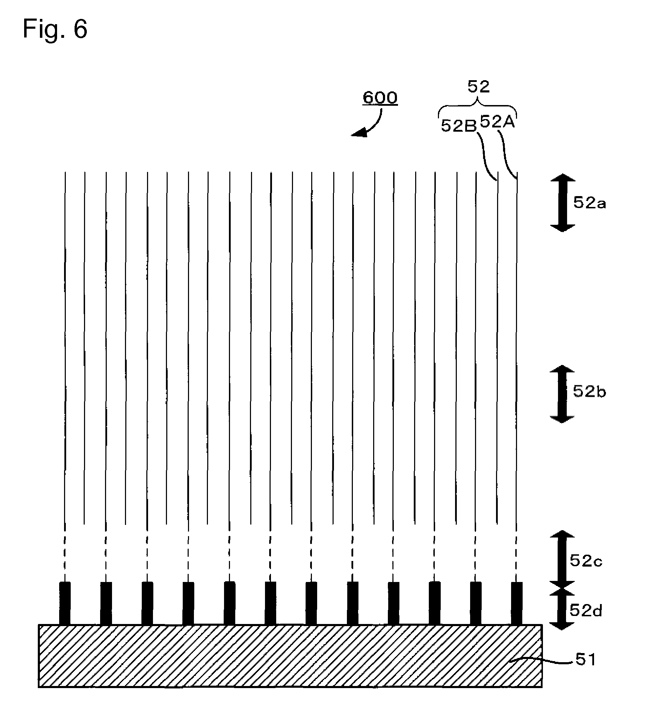

Fig. 6 is a schematic sectional view of a preferred example of the third embodiment of the substrate with the approximately vertically aligned CNTs according to the present invention. The preferred example 600 of the third embodiment comprises a substrate 51 and CNTs 52. The diameter of the dashed line part of each CNT 52 is smaller than the diameter of a solid line part thereof.

As shown in Fig. 6, the preferred example 600 of the third embodiment comprises CNTs 52A, which are connected to the substrate, and CNTs 52B, which are not connected to the substrate and are almost the same in diameter. Also as shown in Fig. 6, the CNTs 52A are longer than the CNTs 52B. In addition, the diameter of the CNTs 52A in a near-substrate part 52c is smaller than the diameter of the CNTs 52A between a surface part 52a and a middle part 52b. Such a structure is possible when, in the second production method described below for example, CNTs that have been prevented from growing and removed from the substrate by increasing the supply of a hydrogen gas and stopping the supply of a carbon source become the CNTs 52B; CNTs that have kept growing and have not been removed from the substrate become the CNTs 52A; and the etching effect of the hydrogen gas on the CNTs 52A is increased. Also as shown in Fig. 6, the diameter of the CNTs 52A in a substrate interface part 52d is larger than that in a near-substrate part 52c. Such a structure is possible when, in a preferred embodiment of the second production method described below for example, the supply of a hydrogen gas is stopped, while supplying a carbon source, to negate the etching effect of the hydrogen gas on the CNTs.

As just described, because the number density of the CNTs in the near-substrate part 52c is smaller than that of the CNTs between the surface part 52a and the middle part 52b and the diameter of the CNTs 52A in the near-substrate part 52c is smaller than both the diameter of the CNTs 52A between the surface part 52a and the middle part 52b and the diameter of the CNTs 52A in the substrate interface part 52d, while the CNTs in the near-substrate 52c are more easily ruptured upon transfer, the CNTs in the substrate interface part 52d are more resistant to rupture. As a result, catalyst particles are likely to remain on the substrate when transferring the CNTs, so that the substrate becomes reusable.

The first production method for producing the substrate with the approximately vertically aligned CNTs according to the present invention, comprises the following steps: preparing a substrate comprising catalyst particles, the particles being present on at least one surface thereof; activating the catalyst particles by increasing the temperature of the substrate; growing CNTs by supplying a carbon source and a hydrogen gas to the activated catalyst particles, the particles acting as the nucleus for the growth of CNTs; forming a part where the number density of the CNTs in an approximately parallel plane to the substrate is smaller than that in other parts, by keeping the temperature of the substrate and stopping the supply of both the carbon source and the hydrogen gas; and preventing the CNTs from growing by decreasing the temperature of the substrate and stopping the supply of both the carbon source and the hydrogen gas.

The second production method for producing the substrate with the approximately vertically aligned CNTs according to the present invention, comprises the following steps: preparing a substrate comprising catalyst particles, the particles being present on at least one surface thereof; activating the catalyst particles by increasing the temperature of the substrate; growing CNTs by supplying a carbon source and a hydrogen gas to the activated catalyst particles, the particles acting as the nucleus for the growth of CNTs; forming a part where the number density and diameter of the CNTs in an approximately parallel plane to the substrate, are smaller than those in other parts, by keeping the temperature of the substrate, stopping the supply of the carbon source and increasing the supply of the hydrogen gas; and preventing the CNTs from growing by decreasing the temperature of the substrate and stopping the supply of both the carbon source and the hydrogen gas.

The first production method comprises the steps of: (1) preparing a substrate, (2) activating catalyst particles, (3) growing CNTs, (4) forming a part where less CNTs are present, and (5) preventing the CNTs from growing. The steps of the first production method are not limited to these five steps. The first production method can comprise a step(s) other than the five steps, such as the below-described step of increasing the diameter of the CNTs.

The second production method is similar to the first production method, except the step (4). Accordingly, the first production method will be mainly described below, and the second production method will be described in the step (4).

Hereinafter, the steps (1) to (5) and other steps will be described in order.

### (1) The step of preparing a substrate

This is a step of preparing a substrate comprising catalyst particles, the particles being present on at least one surface thereof.

The substrate used in the first production method, the substrate comprising catalyst particles, can be one prepared in advance or a commercially-available product.

The substrate used in the first production method is not particularly limited, as long as it has a flat surface on which a CNT layer can be grown. The substrate used in the first production method can be in a plate form or a sheet form. Concrete examples of the substrate used in the first production method include a silicon substrate, a quarts substrate, a metal substrate (such as a substrate of stainless-steel, copper or titanium) or the like. Of them, preferred is a metal substrate, from the viewpoint of good handling properties.

As needed, a surface of the substrate on which CNTs will be grown, is subjected to washing, in advance. As the method for washing the substrate, for example, there may be mentioned heating in a vacuum.

The catalyst particles used in the first production method refer to a catalyst that acts as the nucleus for the growth of CNTs. The catalyst particles are not particularly limited, as long as they are those that have been used to grow CNTs. Concrete examples of the catalyst particles used in the first production method include those containing iron, nickel, cobalt, manganese, molybdenum, palladium or the like. Of them, preferred is an iron catalyst, from the point of view that it is a relatively low-cost catalyst and provides a fast CNT growth rate.

The embodiment in which the catalyst particles are present on at least one surface of the substrate, is not particularly limited. Examples of the substrate comprising the catalyst particles include the following: a substrate in which catalyst particles are simply placed on a surface thereof; a substrate in which catalyst particles are supported on a surface thereof; and a substrate in which a layer containing a catalyst metal is formed on a surface thereof.

The method for forming a layer containing a catalyst metal on a surface of the substrate, is as follows. First, a thin metal layer is formed on a surface of the substrate by sputtering or applying a solution containing a catalyst metal and/or a precursor thereof. Under a reductive atmosphere, the substrate is heated at about 700 to 750°C, so that the thin metal layer is changed into microparticles to form a layer containing catalyst particles on the substrate.

Preferably, the catalyst particles generally have a particle size of about 5 to 100 nm. To support the catalyst particles with such a particle size on the substrate, the thickness of the thin metal layer is preferably about 3 to 10 nm.

### (2) The step of activating catalyst particles

This is a step of activating the catalyst particles by increasing the temperature of the substrate.

In the steps between this step and the step of preventing the CNTs from growing, it is allowed to use a CVD device that is used in chemical vapor deposition (hereinafter simply referred to as CVD), etc. The CVD device is preferably equipped with a means to control the substrate temperature.

From the viewpoint of increasing the purity of the CNTs grown on the substrate, it is preferable that the atmosphere inside the device is replaced by an inert gas such as nitrogen or argon, in advance.

The temperature of the substrate is preferably increased to the temperature at which the catalyst particles are activated. The catalyst particles activating temperature is, depending on the type of the catalyst particles, preferably 500 to 1,000°C.

The time for activating the catalyst particles is, depending on the type of the catalyst particles or the rate of temperature increase, preferably one minute to two hours.

In the activation of the catalyst particles, it is preferable to introduce a carrier gas such as nitrogen gas into the device. It is more preferable to introduce the carrier gas and a hydrogen gas into the device.

### (3) The step of growing CNTs

This is a step of growing CNTs by supplying a carbon source and a hydrogen gas to the activated catalyst particles, the particles acting as the nucleus for the growth of CNTs.

The carbon source used in the first production method is not particularly limited, as long as it is a carbonaceous material that has been used to grow CNTs. Concrete examples of the carbon source used in the first production method include hydrocarbon gases such as an acetylene gas, a methane gas and an ethylene gas. Of them, preferred is an acetylene gas, from the viewpoint of growth rate.

The flow rate, supplying time, total supplied amount and so on of the carbon source and the hydrogen gas, which are materials, are not particularly limited. They can be appropriately determined considering the tube length and diameter of the CNTs. For example, the length of the CNTs grown on the substrate varies depending on the concentration of the carbon source supplied (the flow rate of the carbon source/(the flow rate of the carbon source + the flow rate of the inert gas)). That is, the higher the concentration of the carbon source supplied, the shorter the length of the CNTs. Also, the higher the concentration of the hydrogen gas supplied, the smaller the diameter of the CNTs. As the concentration of the hydrogen gas gets lower, the diameter of the CNTs increases.

Soot is produced when the CNTs are grown. When the soot is deposited around the catalyst particles, the supply of the material gas to the catalyst particles can be inhibited. Since the growth of the CNTs is promoted using the catalyst particles on the substrate as the nucleus, the growth of the CNTs in the longitudinal direction is stopped when the supply of the material gas to the catalyst particles is inhibited.

It is preferable that the length of the CNTs is 10 to 200 µm and the distance between the CNTs is 50 to 300 nm. This is because a sufficient amount of catalyst can be supported on the CNTs in the below-described process of supporting a catalyst.

In the manner as described above, the CNTs that are substantially vertically aligned on the substrate to the plane direction of the substrate, can be obtained. The CNTs that are substantially vertically aligned to the plane direction of the substrate are as described above.

In this step, the temperature of the substrate is preferably a temperature at which the CNTs can be efficiently grown. The temperature at which the CNTs can be efficiently grown is, depending on the type of the catalyst particles, preferably 500 to 1,000°C. The temperature of the substrate can be the same as or different from the catalyst particles activating temperature described above.

The time for growing the CNTs is, depending on the thickness of the desired CNT layer, the type of the catalyst particles and the temperature of the substrate, preferably 5 to 15 minutes.

### (4) The step of forming a part where less CNTs are present

In the first production method, this is a step of forming a part where the number density of the CNTs in an approximately parallel plane to the substrate is smaller than that in other parts, by keeping the temperature of the substrate and stopping the supply of both the carbon source and the hydrogen gas.

In this step, by keeping the substrate temperature high and stopping the supply of the carbon source and the hydrogen gas for a predetermined period of time, the time at which each CNT stops growing is varied among the CNTs. As a result, the part thus grown for the predetermined period of time becomes the part where less CNTs are present compared to other parts.

The time for keeping the temperature of the substrate and stopping the supply of both the carbon source and the hydrogen gas, is not particularly limited, as long as it is a period of time for which a layer with a thickness that can be easily ruptured, can be formed. The time is preferably 5 to 15 minutes.

It is preferable that after this step and prior to the below-described step of stopping the growth of the CNTs, there is a step of increasing more the diameter of the CNTs in the interface with the substrate, by keeping the temperature of the substrate and, while supplying the carbon source, stopping the supply of the hydrogen gas. By stopping the supply of the hydrogen gas in this step, the gas having an effect of decreasing the diameter of CNTs, i.e., the etching effect, the diameter of the CNTs in the part thus grown for the predetermined period of time, for which the supply of the hydrogen gas is stopped, becomes larger than the diameter of the CNTs in other parts. As a result, the diameter of the CNTs in the substrate interface part becomes larger and more resistant to rupture, so that the substrate with the approximately vertically aligned CNTs according to the present invention can be obtained, which can prevent the catalyst particles from being detached from the substrate when transferring the CNTs.

The time for stopping the supply of the hydrogen gas is, depending on the growth rate of the CNTs, preferably 1 to 10 minutes.

In the second production method, this step is a step of forming a part where the number density of the CNTs in an approximately parallel plane to the substrate and the diameter of the CNTs are smaller than those in other parts, by keeping the temperature of the substrate, stopping the supply of the carbon source and increasing the supply of the hydrogen gas.

In this step, by keeping the substrate temperature high and stopping the supply of the carbon source for a predetermined period of time, the time at which each CNT stops growing is varied among the CNTs; moreover, by increasing the supplied amount of the hydrogen gas for a predetermined period of time, the gas having the etching effect, the diameter of the CNTs in the part thus grown for the predetermined period of time, is decreased smaller than that in other parts. As a result, the part thus grown for the predetermined period of time becomes the part where less CNTs are present compared to other parts.

The time for keeping the temperature of the substrate, stopping the supply of the carbon source and increasing the supply of the hydrogen gas, is not particularly limited, as long as it is a period of time for which a layer with a thickness that can be easily ruptured, can be formed. The time is preferably 5 to 15 minutes. It is not needed to perform the increasing of the supply of the hydrogen gas and the stopping of the supply of the carbon source at the same time.

In the second production method, it is preferable that after this step and prior to the below-described step of stopping the growth of the CNTs, there is a step of increasing more the diameter of the CNTs in the interface with the substrate, by keeping the temperature of the substrate and, while supplying the carbon source, stopping the supply of the hydrogen gas. The principle of this step and the appropriate time for increasing the hydrogen gas supply are the same as those of the first production method.

### (5) The step of preventing the CNTs from growing

This is a step of preventing the CNTs from growing by decreasing the temperature of the substrate and stopping the supply of both the carbon source and the hydrogen gas.

In this step, the supply of both the carbon source and the hydrogen gas, both of which are involved in the growth of the CNTs, is stopped. However, a carrier gas such as nitrogen gas, which is not involved in the growth of the CNTs, can be supplied. When the temperature of the substrate is decreased to room temperature (15 to 25°C), the substrate with the approximately vertically aligned CNTs is taken out from the device.

The production methods described above uses the CVD method which produces CNTs by allowing catalyst particles and material gases to exist together in a high temperature condition. The method for producing CNTs is not limited to the CVD method. For example, CNTs can be produced by a vapor deposition method such as arc discharge method or laser deposition method, or by using a conventionally-known synthesizing method.

The method for producing a membrane electrode assembly for fuel cells comprising the substrate with the approximately vertically aligned CNTs according to the present invention, comprises the following steps: supporting a catalyst on the CNTs on the substrate obtained by the first or second production method; coating the catalyst-supported CNTs with an ionomer; and transferring the ionomer-coated CNTs to an electrolyte membrane.

The method for supporting a catalyst on the CNTs is not particularly limited. A catalyst can be supported on the CNTs by any one of a wet method and dry method. As the wet method, there may be mentioned a method in which a solution containing a metal salt is applied to the surface of the CNTs, and then a reduction treatment is performed by heating the CNTs to 200°C or more in a hydrogen atmosphere. As the metal salt, for example, there may be mentioned the following: halides of the metals exemplified above as the catalyst particles; acid halides of the same; inorganic acid salts of the same; organic acid salts of the same; and complex salts of the same. A solution containing any one of the metal salts can be an aqueous solution or an organic solvent solution. The metal salt solution can be applied to the CNT surface by, for example, immersing the CNTs in the metal salt solution, or dropping (spraying) the metal salt solution onto the CNT surface.

For example, in the case of using platinum as the catalyst, a platinum salt solution can be used in the dry method, which is obtained by dissolving an appropriate amount of chloroplatinic acid, platinum nitric acid solution (e.g., dinitrodiammine platinum nitric acid solution) or the like in an alcohol such as ethanol or isopropanol. From the viewpoint of supporting platinum uniformly on the CNT surface, it is particularly preferable to use a platinum salt solution obtained by dissolving a dinitrodiammine platinum nitric acid solution in an alcohol.

As the dry method, there may be mentioned an electron beam evaporation method, a sputtering method, an electrostatic coating method, etc.

In this production method, a water repellent treatment can be used. A water repellent agent used in the treatment can be a conventionally-known agent. It is particularly preferable to appropriately select at least one kind from fluorine-based resins for use, and there may be used polytetrafluoroethylene (PTFE), polyvinylidene fluoride (PVDF), CYTOP (product name; manufactured by Asahi Glass Co., Ltd.), etc.

The supporting of the catalyst can be performed after the water repellent treatment. In this case, however, the method for supporting of the catalyst is limited to the wet method using the platinum salt solution, in which high temperature is not needed for supporting, or the electrostatic coating method. This is because the water repellent layer thus formed by the water repellent treatment may be damaged when the catalyst is supported at high temperature.

The method for coating the catalyst-supported CNTs with an ionomer can be a conventionally-known method. For example, there may be mentioned the following methods: a method of coating the CNT surface by, for example, applying an ionomer, which is a polymer; and a method of coating the CNT surface by applying a polymer composition to the CNT surface, drying the composition as needed, and then polymerizing the same by radiation (e.g., irradiation with UV) or heating, the composition containing an ionomer precursor (monomer) and an additive(s) as needed, such as a polymerization initiator.

The ionomer used in the present invention is a polyelectrolyte that is used in fuel cells. Concrete examples of the polyelectrolyte that can be used in the present invention, include the following: fluorine-based polyelectrolytes such as perfluorocarbon sulfonic acid resins represented by Nafion (trademark) and hydrocarbon-based polyelectrolytes obtained by incorporating a protonic acid group (proton conductive group) such as sulfonic acid group, carboxylic acid group, phosphate group or boronic acid group into an engineering plastic such as polyether ether ketone, polyether ketone, polyether sulfone, polyphenylene sulfide, polyphenylene ether or polyparaphenylene or into a commodity plastic such as polyethylene, polypropylene or polystyrene.

In the substrate with the CNTs, the CNTs supporting the catalyst and being coated with the ionomer, the number density of the CNTs is as follows, for example.

First, the number density of the CNTs in the surface part is 1×10⁸ to 5×10¹⁰ CNTs/cm². The number density of the CNTs in the middle part is 1×10⁸ to 5×10¹⁰ CNTs/cm². Also, the number density of the CNTs in the near-substrate part is 75% or less of the number density of the CNTs between the surface part and the middle part.

As described above, even after the catalyst is supported on the CNTs and the CNTs are coated with the ionomer, the number density of the CNTs in the near-substrate part is smaller than the number density of the CNTs in other parts, so that the CNT layer with a uniform thickness can be formed even after the CNTs are removed in the below-described transfer step.

The electrolyte membrane used in the present invention is an electrolyte membrane containing the above-described ionomer.

The method for transferring the ionomer-coated CNTs to the electrolyte membrane, can be a conventionally-known method. As the transfer method, for example, there may be mentioned thermal transfer. As the method for attaching the CNTs to the electrolyte membrane, for example, there may be mentioned the following: a method in which a gelled ionomer solution is casted onto the surface of the CNTs to directly form an electrolyte membrane thereon; and a method in which a polymer, which is the raw material for an electrolyte membrane, is melt-extruded onto the surface of the CNTs to directly form an electrolyte membrane thereon.

Hereinafter, the thermal transfer method will be described. In the thermal transfer method, the heating temperature is equal to or more than the softening temperature of the electrolyte membrane and that of the ionomer applied to the CNTs. However, it is preferable to avoid excess heating, in order to prevent a deterioration in the electrolyte membrane or ionomer, or to prevent a decrease in proton conductivity. The appropriate heating temperature of the thermal transfer varies depending on the electrolyte membrane or electrolyte resin used. It is generally about 110 to 160°C, preferably about 120 to 130°C. In the case of using a perfluorocarbon sulfonic acid resin as the electrolyte membrane and the electrolyte resin, the temperature is preferably 140 to 150°C.

The pressure applied upon the thermal transfer is generally about 2 to 12 MPa, preferably about 4 to 8 MPa, when the heating temperature is within the above range. In the case of using a perfluorocarbon sulfonic acid resin as the electrolyte membrane and the electrolyte resin, the pressure is preferably 8 to 10 MPa.

The time for keeping the heating temperature and the pressure (transfer time) is generally about 5 to 20 minutes, preferably about 10 to 15 minutes. In the case of using a perfluorocarbon sulfonic acid resin as the electrolyte membrane and the electrolyte resin, the time is preferably 10 to 15 minutes.

The membrane electrode assembly obtained by the production method is produced by using the above-described substrate with the CNTs. Therefore, the thickness of the catalyst layer including the CNTs is uniform. As a result, when the membrane electrode assembly is used in a fuel cell, the charge-discharge properties and durability of the fuel cell are excellent and better than fuel cells comprising conventional CNT electrodes.

### Examples

Hereinafter, the present invention will be described in more detail, by way of Examples and Comparative Examples. However, the present invention is not limited to these examples.

### 1. Production of a substrate with approximately vertically aligned CNTs

### [Example 1]

First, as catalyst particles, an iron catalyst was sputtered on a silicon substrate into a film. The substrate having the film of the catalyst particles formed thereon, was placed inside a CVD furnace.

Next, a 25% hydrogen gas (carrier: nitrogen) was supplied into the CVD furnace. The temperature inside the furnace was increased from room temperature (20°C) to 800°C for 78 minutes to activate the catalyst particles.

Then, while keeping the temperature inside the furnace at 800°C, an 8% acetylene gas (carrier: nitrogen) was supplied as a carbon source into the CVD furnace, in addition to the 25% hydrogen gas (carrier: nitrogen), and CNTs are grown for 10 minutes.

Next, while keeping the temperature inside the furnace at 800°C, the supply of both the 25% hydrogen gas and the 8% acetylene gas was stopped, and the CNTs were allowed to stand for 10 minutes. By this step, the time at which each CNT stopped growing was varied among the CNTs.

Finally, a 100% nitrogen gas was supplied into the CVD furnace, and the temperature inside the furnace was cooled from 800°C to room temperature (20°C), thus producing the substrate with the approximately vertically aligned CNTs of Example 1.

### [Example 2]

First, CNTs were grown in the same manner as Example 1.

Next, while keeping the temperature inside the furnace at 800°C, the supply of both the 25% hydrogen gas and the 8% acetylene gas was stopped, and the CNTs were allowed to stand for 10 minutes. By this step, the time at which each CNT stopped growing was varied among the CNTs.

Then, while keeping the temperature inside the furnace at 800°C, only the 8% acetylene gas (carrier: nitrogen) was supplied as a carbon source into the CVD furnace, and the CNTs were allowed to stand for 10 minutes. By this step, the diameter of the CNTs in the substrate interface part was increased.

Finally, the 100% nitrogen gas was supplied into the CVD furnace, and the temperature inside the furnace was cooled from 800°C to room temperature (20°C), thus producing the substrate with the approximately vertically aligned CNTs of Example 2.

### [Comparative Example 1]

CNTs were grown in the same manner as Example 1.

Finally, the 100% nitrogen gas was supplied into the CVD furnace , and the temperature inside the furnace was cooled from 800°C to room temperature (20°C), thus producing the substrate with the approximately vertically aligned CNTs of Comparative Example 1. That is, in Comparative Example 1, the step of stopping the supply of the 25% hydrogen gas and the 8% acetylene gas while keeping the temperature inside the furnace at 800°C, was not performed.

### [Comparative Example 2]

The substrate with the approximately vertically aligned CNTs of Comparative Example 2 was produced in the same manner as Example 1, except that an SUS substrate was used in place of the silicon substrate.

### 2. Production of a substrate with approximately vertically aligned CNTs supporting platinum and being coated with an ionomer

### [Example 3]

A dinitrodiamine platinum nitric acid solution was diluted with ethanol to prepare a platinum salt solution having a platinum concentration of 10 g/L. Keeping the CNT-aligned surface of the substrate of Example 2 facing upward, 200 µL of the platinum salt solution was dropped to the surface so that the dropped solution amount per unit area of the substrate was uniform (about 8 µL/cm²). Then, in a 4% hydrogen (carrier: argon) atmosphere, the substrate was subjected to a heat treatment at 320°C for 2 hours. The dropping of the platinum salt solution and the heat treatment were each repeated three times, thus supporting a 0.24 mg/cm² platinum catalyst on the CNTs on the substrate.

A solution of perfluorocarbon sulfonic acid resin (10 g/L) in ethanol (Nafion solution manufactured by DuPont, EW 1,100) was dropped onto the CNTs supporting the platinum catalyst so that the perfluorocarbon sulfonic acid resin amount (electrolyte resin amount) per unit area of the substrate was 0.6 mg/cm² (that is, perfluorocarbon sulfonic acid resin/CNTs=3 (by mass ratio)). Then, the substrate was dried in a vacuum at 140°C. Therefore, the substrate with the approximately vertically aligned CNTs of Example 3 was produced, the CNTs supporting platinum and being coated with the ionomer.

### 3. Measurement of the number density and average diameter of CNTs

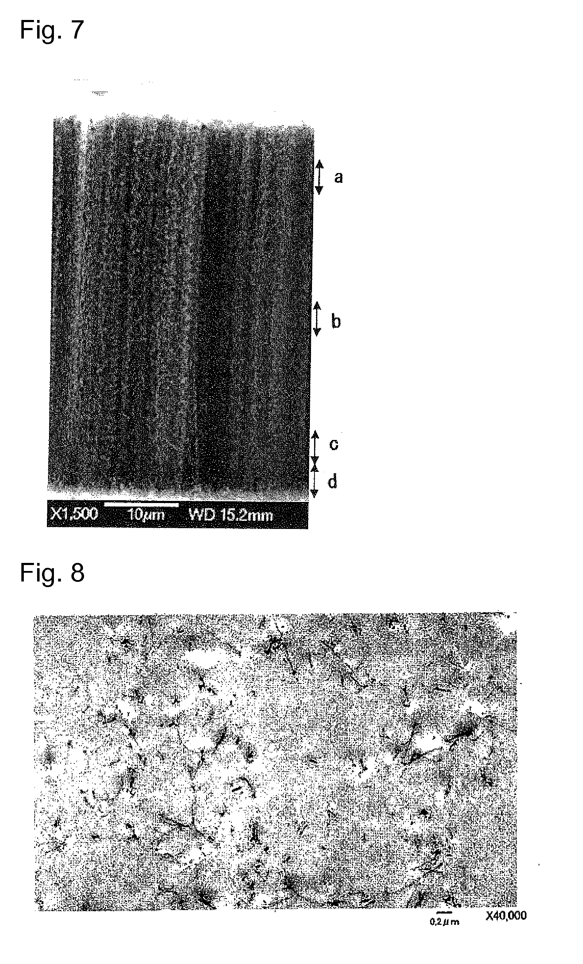

The substrates with the approximately vertically aligned CNTs of Examples 1 and 2 and Comparative Example 1, and the substrate with the approximately vertically aligned CNTs of Example 3, the CNTs supporting platinum and being coated with the ionomer, were measured for the number density and average diameter of the CNTs by TEM observation. Fig. 7 is an SEM image of a cross section of CNTs in Example 2, taken along the longitudinal direction.

The CNTs on each of the substrates of Examples 1 to 3 and Comparative Example 1, were embedded in a resin. Next, the following parts of the resin-embedded CNTs were sliced to obtain a very slight section (t=50 to 80 nm), thus producing specimens for TEM observation: a part that is 50 to 55 µm distant from the substrate (hereinafter referred to as "surface part", which corresponds to "a" in Fig. 7); a part that is 25 to 30 µm distant from the substrate (hereinafter referred to as "middle part", which corresponds to "b" in Fig. 7); a part that is 5 to 7 µm distant from the substrate (hereinafter referred to as "near-substrate part", which corresponds to "c" in Fig. 7); and a part that is 2 to 3 µm distant from the substrate (hereinafter referred to as "substrate interface part", which corresponds "d" in Fig. 7).

The thus-obtained specimens were subjected to TEM observation. Detailed TEM observation conditions are as follows.

### Measurement for the number density of the CNTs

· Measurement device: TEM (model: H-7650, manufactured by: Hitachi High-Technologies Corporation)
· Accelerating voltage: 100 kV
· Magnification: 40,000x

### Measurement for the diameter of the CNTs

· Measurement device: FE-TEM (model: JEM-2200FS; manufactured by: JEOL Ltd.)
· Accelerating voltage: 100 kV
· Magnification: 250,000x

Each of ruptured CNTs shown on the thus-obtained TEM images, was marked with a dot by image processing, thus measuring the number of the CNTs. Four fields were photographed and measured per specimen, and the number density was calculated from the area of the specimen and the number of the CNTs.

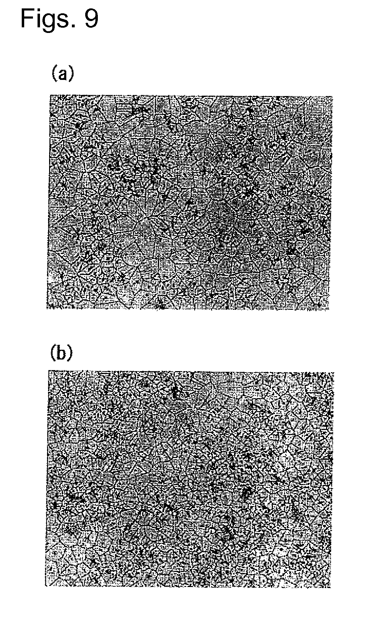

Fig. 8 is a TEM image of the substrate interface part in Example 2. Fig. 9 (a) is a Voronoi diagram of the near-substrate part in Example 2. Fig. 9(b) is a Voronoi diagram of the middle part in Example 2.

Each of the ruptured CNTs shown on the thus-obtained TEM images, was subjected to image processing, analyzed for contrast and measured for diameter. Then, 50 to 100 CNTs per specimen were measured for diameter. The mode (the peak value of the diameter distribution) was calculated from histograms and used as the diameter of the CNTs.

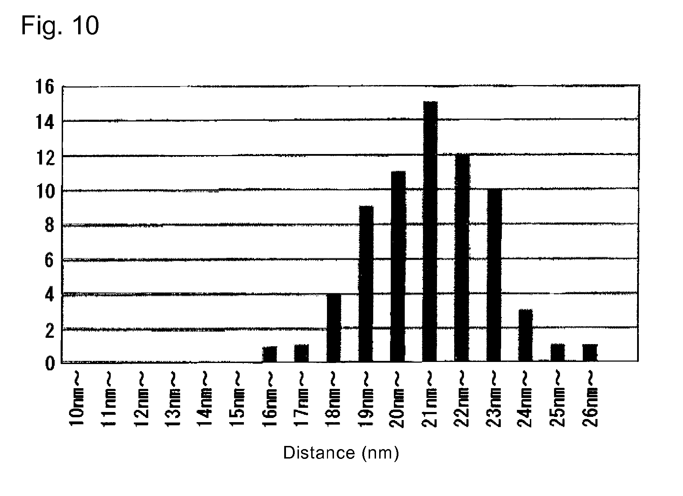

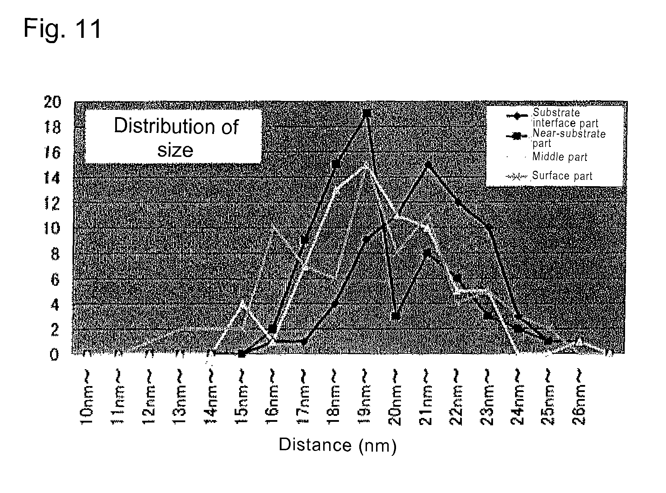

Fig. 10 is a bar chart (histogram) of the diameter of CNTs in the substrate interface part in Example 2. Fig. 11 is a histogram of the following CNT diameters: the diameter of CNTs in the substrate interface part in Example 2; the diameter of CNTs in the near-substrate part in Example 2; the diameter of CNTs in the middle part in Example 2; and the diameter of CNTs in the surface part in Example 2.

The following table 1 shows the following data: the number density and diameter distribution peak of the CNTs in the specimens of Example 1 and 2 and Comparative Example 1; and the number density of the CNTs in the specimen of Example 3.

**Table 1**

| | | Number density (10⁹ CNTs/cm²) | Diameter (nm) |
|---|---|---|---|
| Example 1 | Surface part | 3.2 | 19 to 20 |
| | Middle part | 3.2 | 19 to 20 |
| | Near-substrate part | 1.9 | 19 to 20 |
| Example 2 | Surface part | 3.24 | 19 to 20 |
| | Middle part | 3.23 | 19 to 20 |
| | Near-substrate part | 1.89 | 19 to 20 |
| | Substrate interface part | 1.84 | 21 to 22 |
| Example 3 | Surface part | 2.0 | - |
| | Middle part | 2.5 | - |
| | Near-substrate part | 1.3 | - |
| Comparative Example 1 | Surface part | 3.2 | 19 to 20 |
| | Middle part | 3.2 | 19 to 20 |
| | Near-substrate part | 3.2 | 19 to 20 |

First, the results of Comparative Example 1 will be considered. In Comparative Example 1, the diameter of the CNTs between the surface part and the near-substrate part is 19 to 20 nm, and the number density of the CNTs between the surface part and the near-substrate part is 3.2×10⁹ CNTs/cm². As just described, the characteristics of the CNTs of Comparative Example 1, which were produced without the process of stopping the supply of both the 25% hydrogen gas and the 8% acetylene gas while keeping the temperature inside the furnace at 800°C, are almost uniform from the near-substrate part to the surface part. Therefore, in the case of transferring the approximately vertically aligned CNTs of the substrate of Comparative Example 1, it is thought that a problem occur in the thus-transferred CNT layer since the CNTs do not have a part which has low strength and is preferentially ruptured.

Next, the results of Examples 1 and 2 will be considered. In both of Examples 1 and 2, the diameter of CNTs between the surface part and the near-substrate part is 19 to 20 nm. Therefore, it is clear that the diameter of the CNTs of Examples 1 and 2 uniform between at least the surface part and the near-substrate part.

However, the diameter of the CNTs in the substrate interface part in Example 2 is 21 to 22 nm. Therefore, in the CNTs of Example 2, the diameter of the CNTs in the substrate interface part is larger than the diameters of the CNTs in other parts.

In both of Examples 1 and 2, the number density of the CNTs between the surface part and the middle part is 3.2×10⁹ CNTs/cm². However, the number density of the CNTs in the near-substrate part in Example 1 is 1.9×10⁹ CNTs/cm²; the number density of the CNTs in the near-substrate part in Example 2 is 1.89×10⁹ CNTs/cm²; and the number density of the CNTs in the substrate interface part in Example 2 is 1.84×10⁹ CNTs/cm². Therefore, for the CNTs of Examples 1 and 2, it is clear that the number density between the near-substrate part and the substrate interface part is about 60 % of that of the CNTs between the surface part and the middle part.

The results of Examples 1 and 2 show that the number density of the CNTs in the near-substrate part is smaller than that between the surface part and the middle part. On the other hand, the results of Example 2 show that the diameter of the CNTs in the near-substrate part is smaller than that in the substrate interface part. Therefore, it was proved that the CNTs in the near-substrate part are thinner and smaller in number than those in other parts. There results suggest that in the case of transferring the approximately vertically aligned CNTs of the substrate of Example 1 or 2, since the CNTs in the near-substrate part are easily ruptured, the thus-transferred CNT layer has a uniform thickness.

Next, the results of Example 3 will be considered. In Example 3, the number density of the CNTs between the surface part and the middle part is 2.0 to 2.5×10⁹ CNTs/cm². On the other hand, the number density of the CNTs in the near-substrate part is 1.3×10⁹ CNTs/cm². This result accounts for 52 to 65% of the number density of the CNTs between the surface part and the middle part. When comparing the results of Example 2 to those of Example 3, it is clear that there was no significant change in the number density of the CNTs, even though platinum was supported on the CNTs and the CNTs were coated with the ionomer. Therefore, even after platinum was supported on the CNTs and the CNTs were coated with the ionomer, the CNTs maintained such a characteristic that the CNTs in the near-substrate part are easily ruptured upon transfer.

As is clear from the comparison of the results of Examples 2 and 3, in all the parts, the number density of the CNTs of Example 3 is smaller than that of the CNTs of Example 2. This result suggests that the density of the CNTs themselves per unit area is decreased by supporting platinum on the CNTs and coating the CNTs with the ionomer.

### Reference Signs List

1. Substrate
2, 2A, 2B. Carbon nanotubes (CNTs)
2a. Surface part of CNTs
2b. Middle part of CNTs
2c. Near-substrate part of CNTs
11. Substrate
12. CNTs
12a. Surface part of CNTs
12b. Middle part of CNTs
12c. Near-substrate part of CNTs
21. Substrate
22, 22A, 22B. CNTs
22a. Surface part of CNTs
22b. Middle part of CNTs
22c. Near-substrate part of CNTs
31. Substrate
32, 32A, 32B. CNTs
32a. Surface part of CNTs
32b. Middle part of CNTs
32c. Near-substrate part of CNTs
32d. Substrate interface part of CNTs
41. Substrate
42. CNTs
42a. Surface part of CNTs
42b. Middle part of CNTs
42c. Near-substrate part of CNTs
42d. Substrate interface part of CNTs
51. Substrate
52, 52A, 52B. CNTs
52a. Surface part of CNTs
52b. Middle part of CNTs
52c. Near-substrate part of CNTs
52d. Substrate interface part of CNTs
61. Substrate
62. CNTs
62a. Surface part of CNTs
62b. Middle part of CNTs
62c. Near-substrate part of CNTs
71. Substrate
72. Object to which CNTs will be transferred (e.g., electrolyte membrane)
73. CNTs
74. Catalyst particles supported on CNTs
75. Electrolyte resin
76. Catalyst particles which act as the nucleus for the growth of CNTs
100. First embodiment of the substrate with the approximately vertically aligned CNTs according to the present invention
200. Second embodiment of the substrate with the approximately vertically aligned CNTs according to the present invention
300. Third embodiment of the substrate with the approximately vertically aligned CNTs according to the present invention
400. Preferred example of the first embodiment of the substrate with the approximately vertically aligned CNTs according to the present invention
500. Preferred example of the second embodiment of the substrate with the approximately vertically aligned CNTs according to the present invention
600. Preferred example of the third embodiment of the substrate with the approximately vertically aligned CNTs according to the present invention
700. Conventional substrate with CNTs

## Claims

1. A substrate with approximately vertically aligned carbon nanotubes,
wherein the carbon nanotubes are approximately vertically aligned on the substrate, and
wherein, at the substrate side rather than the middle part of the longitudinal direction of the carbon nanotubes, there is a part where the number density of the carbon nanotubes in an approximately parallel plane to the substrate, is smaller than that in other parts.

2. The substrate with the approximately vertically aligned carbon nanotubes according to claim 1, wherein the diameter of the carbon nanotubes in the substrate interface part is larger than the diameter of the carbon nanotubes in the part where the number density of the carbon nanotubes is smaller than that in other parts.

3. A substrate with approximately vertically aligned carbon nanotubes,
wherein the carbon nanotubes are approximately vertically aligned on the substrate, and
wherein, at the substrate side rather than the middle part of the longitudinal direction of the carbon nanotubes, there is a part where the diameter of the carbon nanotubes in an approximately parallel plane to the substrate, is smaller than that in other parts.

4. The substrate with the approximately vertically aligned carbon nanotubes according to claim 3, wherein the diameter of the carbon nanotubes in the substrate interface part is larger than the diameter of the carbon nanotubes in the part where the diameter of the carbon nanotubes is smaller than that in other parts.

5. A substrate with approximately vertically aligned carbon nanotubes,
wherein the carbon nanotubes are approximately vertically aligned on the substrate, and
wherein, at the substrate side rather than the middle part of the longitudinal direction of the carbon nanotubes, there is a part where the number density and diameter of the carbon nanotubes in an approximately parallel plane to the substrate, are smaller than those in other parts.

6. The substrate with the approximately vertically aligned carbon nanotubes according to claim 5, wherein the diameter of the carbon nanotubes in the substrate interface part is larger than the diameter of the carbon nanotubes in the part where the number density and diameter of the carbon nanotubes are smaller than those in other parts.
